# FASCICULE DE BREVET EUROPEEN

(11) **EP 1 059 297 B1**
(45) Date de publication et mention de la délivrance du brevet: **11.09.2002**
(21) Numéro de dépôt: 00401547.5
(22) Date de dépôt: 31.05.2000
(51) Int. Cl.: C07F 7/10

(54) **Procédé de fabrication d'urées bis-silylées**
Verfahren zur Herstellung von Bissilylharnstoffen
Process for preparing bis-silyl ureas

(30) Priorité: 08.06.1999 FR 9907206
(43) Date de publication de la demande: 13.12.2000
(73) Titulaire: Tessenderlo Chemie N.V., 3980 Tessenderlo (BE)
(72) Inventeur: Reeves, David, 69340 Francheville (FR); Ruppin, Christophe, 69310 Pierre-Benite (FR); Drivon, Gilles, 69850 Saint Martin en Haut (FR)
(74) Mandataire: Brants, Johan Philippe Emile

(56) Documents cités:
- EP-A- 0 043 630
- US-A- 3 992 428

## Description

La présente invention concerne un procédé de fabrication d'urées bis-silylées.

Les urées bis-silylées sont utilisées comme intermédiaires dans la synthèse de produits pharmaceutiques. Ainsi, la 1,3-bis (triméthylsilyl) urée (BSU) est utilisée dans la synthèse d'antibiotiques tels que l'ampicilline et la céphalexine.

Les principales voies d'accès aux urées bis-silylées (I) comprennent des procédés qui consistent à faire réagir un disilazane (II) et l'urée selon l'équation (1) : 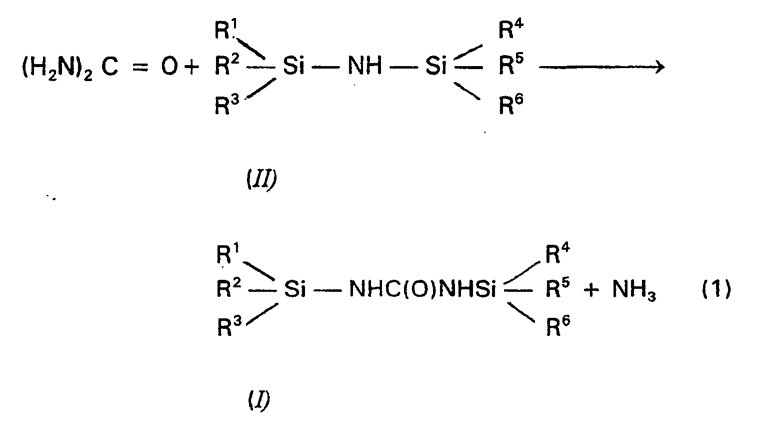 R¹, R², R³, R⁴, R⁵ et R⁶ dans les formules I et II, pouvant être identiques ou différents, représentent un radical hydrocarboné aliphatique, linéaire ou ramifié ayant un nombre d'atomes de carbone allant de 1 à 5, un radical phényle, un radical benzyle, un radical phénétyle.

Les procédés utilisant cette voie de synthèse sont très voisins et ne diffèrent que par l'utilisation de catalyseurs différents, de rapports molaires urée/(II) variables, de solvants différents et par l'utilisation de réactifs plus ou moins purs, notamment par l'utilisation d'une urée présentant des granulométries très différentes.

L'utilisation d'un catalyseur est nécessaire sinon la réaction (1) est lente ou elle ne se produit pas. Afin d'accélérer la réaction, il est possible d'élever la température de réaction mais cette élévation de la température est susceptible d'entraîner la dégradation plus ou moins importante des produits obtenus avec formation d'impuretés difficiles à éliminer. Aussi, tous les procédés portés à notre connaissance utilisent des catalyseurs.

La plupart des catalyseurs utilisés sont des sels d'ammonium tels que le chlorure d'ammonium ou le sulfate d'ammonium mentionnés dans le brevet US 3,992,428, des acides de Lewis tels que BCl₃, TiCl₄, AlCl₃, ou des acides minéraux tels que HBr ou H₃PO₄ mentionnés également dans le brevet US 3,992,428, des chlorosilanes tels que le triméthylchlorosilane mentionné dans la demande de brevet FR 2,333805, des composés azotés contenant des groupements attracteurs d'électrons tels que la saccharine mentionnée dans la demande de brevet EP 43630. Ainsi, dans cette demande de brevet, la 1,3-bis1,3-bis(triméthylsilyl) urée (BSU) est obtenue avec un rendement de 99 % après 20 minutes de réaction entre l'hexaméthyldisilazane (HMDZ) et l'urée utilisés dans un rapport molaire HMDZ/urée égal à 1,187 dans l'acétate d'éthyle en présence de saccharine utilisée à raison de 1 % molaire par rapport à l'urée mise en oeuvre.

Ces catalyseurs bien que diminuant la durée de réaction présentent l'inconvénient majeur de rester dans les composés (I) et de ce fait entraînent l'instabilité des produits (I) au stockage, une diminution de leur résistance à l'hydrolyse et des colorations. Tous ces inconvénients sont rédhibitoires pour certaines applications industrielles telles que notamment la fabrication d'antibiotiques.

En outre, l'élimination desdits catalyseurs qui sont généralement en très faibles quantités dans les produits (I) entraîneraient des opérations de purification longues et coûteuses, rédhibitoires pour la productivité d'un procédé industriel.

Dans la plupart des procédés de fabrication des produits (I) mentionnés dans la littérature, on utilise un solvant (ou un mélange de solvants). Parmi les solvants utilisés, on citera les carbures aromatiques tels que le benzène, toluène (US 3,992,428), les acétates d'alkyles tels que l'acétate d'éthyle (EP 43630), les éthers tels que le di-n-butyléther, le dioxane ou le THF, les cétones telle que l'acétone, des hydrocarbures chlorés tels que CH₂Cl₂ ou le 1,2-dichloroéthane (Ts. Guéorguiéva et al. Farmatsiya, 31(2) 1981 pages 1 à 5), des siloxanes tels que l'hexamethyldisiloxane mentionné dans le brevet US 3,992,428 et les disilazanes (II) qui sont également réactifs.

Ainsi, dans la demande DE 4041651, on décrit un procédé de préparation du BSU en utilisant l'hexaméthyldisilazane (HMDZ) comme réactif et solvant.

Le procédé consiste à chauffer au reflux de l'HMDZ, 10 g d'urée (ayant une teneur en eau de 0,3 % en poids) soit 0,151 mole dans 180 ml d'HMDZ soit 0,853 mole en présence de 1 g d'échangeur de cations et 0,1 g d'eau. Après refroidissement, 30 g de BSU précipite, ce qui correspond à un rendement de 86 %.

Après retraitement du filtrat, on récupère 4,5 g supplémentaires de BSU, ce qui porte le rendement final à 99 %.

Bien qu'il soit attractif d'utiliser l'HMDZ comme réactif et comme solvant, on constate cependant que cette façon d'opérer présente l'inconvénient qu'il est nécessaire d'effectuer le traitement du filtrat en vue de récupérer une partie non négligeable de BSU qui s'est solubilisée.

En outre, ladite BSU récupérée est susceptible de contenir des impuretés et, par conséquent, nécessite une opération de purification.

Compte tenu également du prix élevé de l'HMDZ, son utilisation en quantité importante est rédhibitoire pour la productivité d'un procédé industriel.

Aussi, la demanderesse a tenté d'améliorer le procédé ci-dessus mentionné en diminuant les quantités d'HMDZ, en supprimant l'eau et l'échangeur de cations et en utilisant le triméthylchlorosilane (TMCS) comme catalyseur.

Elle a constaté qu'elle ne pouvait travailler qu'avec un rapport molaire HMDZ / urée voisin de 3, un rapport plus faible entraînait un milieu réactionnel épais, difficile à agiter par des dispositifs courants. De plus, il est difficile d'éliminer totalement l'HMDZ de la BSU obtenue.

Lors de ces essais, la demanderesse a également constaté l'importance de la granulométrie de l'urée qui est quasiment insoluble dans l'HMDZ à reflux. Ce produit ne se trouve dans le commerce que sous forme de grains grossiers ou de billes de diamètre allant de 1 à 2 mm.

L'utilisation d'une telle urée entraîne une réaction longue et incomplète et conduit à un produit final qui contient de l'urée non transformée très difficile à éliminer.

Afin d'augmenter sa transformation, on peut réaliser un broyage de l'urée et l'utiliser sous forme d'une poudre fine. Cette façon d'opérer grève le procédé d'un broyage coûteux et la transformation de l'urée n'est pas également totalement complète.

On a maintenant trouvé un procédé de préparation d'urées bis-silylées (I) qui consiste à faire réagir dans un solvant l'urée et un disilazane (II) selon l'équation (1), ledit procédé consistant à effectuer les étapes suivantes :
a) mettre en contact, sous agitation, un solvant, un disilazane, et l'urée,
b) porter le milieu obtenu en a) à une température égale ou inférieure à la température d'ébullition dudit solvant,
c) maintenir, dès le début de dégagement de l'ammoniac, une température égale ou différente à celle utilisée en b) et, de préférence, inférieure à la température d'ébullition du solvant,
d) maintenir cette température jusqu'à dégagement quasi total de l'ammoniac, puis stripper éventuellement l'ammoniac résiduel par un gaz inerte,
e) refroidir le milieu réactionnel, et
f) récupérer l'urée bis-silylée (I) précipitée par filtration, éventuellement la laver avec un solvant identique ou différent à celui utilisé en a), puis la sécher sous pression réduite ;
ledit procédé étant caractérisé en ce que le solvant utilisé en a) pour la réaction et éventuellement en f) pour le lavage de l'urée bis-silylée (I), est un nitrile aliphatique RCN dans lequel R représente un radical hydrocarboné aliphatique, linéaire ou ramifié, ayant un nombre d'atomes de carbone allant de 1 à 5 et, de préférence, allant de 1 à 3.

A titre d'illustration de tels nitriles aliphatiques utilisables selon la présente invention, on citera : l'acétonitrile, le propionitrile, le butyronitrile. On utilisera de préférence l'acétonitrile.

Selon la présente invention, le solvant de lavage de l'urée bis-silylée (I) est, de préférence, identique au solvant de réaction utilisé en a).

Selon une variante particulièrement préférée du procédé selon l'invention, le solvant de réaction utilisé en a) peut être constitué en totalité ou en partie par les filtrats provenant de la filtration et éventuellement par les condensats provenant du séchage de l'urée bis-silylée (I) d'une opération précédente. Dans l'éventualité où on recycle en partie les filtrats provenant de la filtration et éventuellement les condensats provenant du séchage de l'urée bis-silylée (I), le complément est assuré par du solvant frais.

De préférence, le solvant de réaction utilisé en a) est constitué en totalité par les filtrats provenant de la filtration d'un opération précédente.

Selon la présente invention, l'urée de départ (H₂N)₂C(O) peut se présenter sous différentes formes telles que billes ou granulés de différentes granulométrie.

De préférence, on utilisera une urée sous forme de billes de diamètre allant de 1 à 2 mm.

Selon la présente invention, on utilisera l'urée et le disilazane (II) selon un rapport molaire disilazane (II) / urée allant de 1 à 1,3 et, de préférence, allant de 1,05 à 1,25.

Le solvant sera utilisé selon un rapport pondéral solvant / disilazane (II) allant de 1 à 5 et, de préférence, allant de 2 à 3.

On opère généralement à pression atmosphérique et sous atmosphère inerte.

L'avancement de la réaction est suivi par dosage de la quantité de NH₃ dégagé en fonction de la durée de réaction.

L'urée bis-silylée (I) est isolée par filtration / centrifugation puis séchée de préférence sous pression réduite.

Dans l'éventualité où la transformation de l'urée est quantitative, l'urée bis-silylée (I) peut être récupérée du milieu réactionnel après évaporation du solvant sous pression réduite puis séchage sous pression réduite. Les distillats, comme les filtrats pouvant être, selon le procédé de la présente invention, recyclés dans l'opération suivante.

Le procédé selon la présente invention s'applique tout particulièrement à la synthèse de la 1,3-bis(triméthylsilyl)urée à partir de l'urée et de l'hexaméthyldisilazane.

Le procédé selon l'invention présente l'avantage de pouvoir utiliser une urée disponible dans le commerce, de qualité dite "technique" se présentant sous forme de billes ou de granulés ne nécessitant pas un broyage.

Les produits obtenus ne contiennent plus d'urée, possèdent une pureté suffisante ne nécessitant pas de purification pour être utilisés directement dans la préparation de médicaments tels que les antibiotiques.

Selon la présente invention, les filtrats et/ou les condensats constitués en majorité par le solvant de réaction et éventuellement par le solvant de lavage peuvent être recyclés plusieurs fois sans que l'on observe une quelconque diminution de la pureté des produits obtenus.

En outre, les composés qui peuvent être présents dans les filtrats et condensats sont essentiellement constitués par les réactifs non transformés solubilisés, par des composés secondaires tels que les siloxanes qui proviennent de l'action de l'eau sur les disilazanes, ladite eau étant susceptible d'être présente en très faible quantité dans les réactifs et/ou solvants et par l'urée bis-silylée (I) elle-même susceptible d'avoir été solubilisée et ne sont pas de nature à perturber la cinétique de la réaction. On a constaté que la concentration des composés secondaires augmentent de façon très lente au cours des recyclages. Ceci présente un autre avantage du procédé qui est de pouvoir effectuer un nombre important de recyclages du solvant sans qu'il soit nécessaire d'effectuer une quelconque purification dudit solvant.

Toutefois, en fonction de la teneur en eau des réactifs et des solvants mis en oeuvre et afin d'éviter une accumulation trop importante de ces composés secondaires, on peut après un certain nombre de recyclages éliminer ces composés secondaires des filtrats par distillation. Le solvant ainsi purifié peut être réutilisé.

Un autre avantage est que l'on peut donc utiliser des réactifs et des solvants sans qu'il soit nécessaire d'effectuer un séchage poussé.

Les exemples ci-après illustrent l'invention.

### CONDITIONS GENERALES :

Réactifs et solvant utilisés :
Urée : sous forme de billes de diamètre allant de 1 à 3 mm ; sans antimottant.
   Pureté : 97,6 %.
Hexaméthyldisilazane - HMDZ :
   Pureté 95,6 %.
Acétonitrile :
   Pureté : 99,8 %.

La détermination de la pureté de la bis(triméthylsilyl)urée (BSU) et des composés présents dans les filtrats a été effectuée par chromatograhie en phase gazeuse et potentiométrie en milieu anhydre.

### EXEMPLE 1

### Préparation du 1,3-bis(triméthylsilyl)urée (BSU)

Dans un réacteur de 1,5 litre, muni d'une agitation, de moyens de chauffage, d'une sortie d'évents reliée à une colonne d'abattage, on introduit sous agitation :
- 112,5 g d'urée (1,827 mole),
- 337,5 g d'HMDZ (1,999 mole),
- 707,4 g d'acétonitrile frais,
puis on chauffe au reflux de l'acétonitrile (81-82°C). Quand on détecte NH₃ dans la colonne d'abattage, on refroidit vers 70°C, température que l'on maintient jusqu'à ce que la totalité de NH₃ soit dégagée.

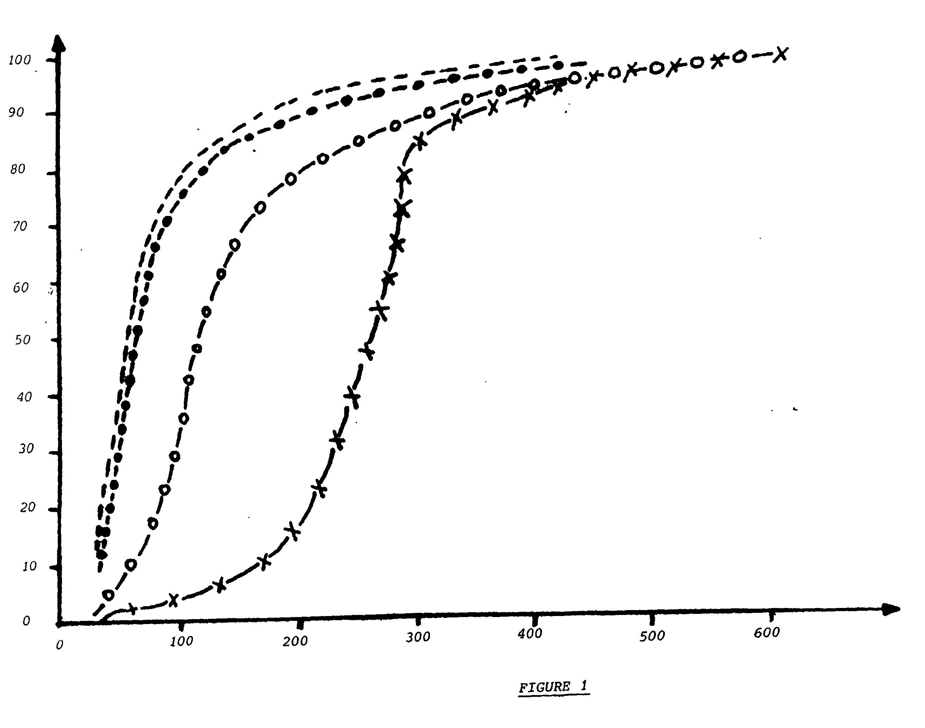

Le pourcentage de NH₃ dégagé en fonction de la durée de réaction est représenté sur la figure 1 par la courbe ― X ― X ― X. Sur cette figure 1, le pourcentage de NH₃ exprimé en pourcentage pondéral est reporté en ordonnée et la durée de réaction exprimée en minutes est reporté en abscisse. On refroidit vers 20°C, puis on filtre le milieu réactionnel. On rince le gâteau avec 135 g d'acétonitrile frais. On obtient 359,2 g de BSU sec présentant une pureté de 98,8 %, ce qui correspond à 354,9 g de BSU pur soit 1,736 moles.

La masse des filtrats est de 758,75 g et la masse des condensats résultant du séchage est de 47,1 g constituée majoritairement par de l'acétonitre.

Les filtrats sont analysés et contiennent en poids :
- 0,3 % d'urée non transformée soit 2,35 g (0,039 mole),
- 2 % d'HMDZ,
- 1,91 % d'hexaméthyldisiloxane (HMDO),
- 0,75 % de BSU solubilisé soit 5,69 g (0,0278 mole),
- 94,55 % d'acétonitrile soit 717,4 g.
Conversion de l'urée : 97,87 %

Le rendement molaire net en BSU filtrée et séchée par rapport à l'urée mise en oeuvre est égal à 96, 2 %.

### EXEMPLE 2, 3 ET 4

### Selon l'invention avec recyclages des filtrats

On opère selon des conditions opératoires identiques à celles de l'exemple 1 avec des quantités de réactifs telles qu'indiquées dans le tableau 1.

Le solvant de réaction n'est plus constitué par de l'acétonitrile frais mais est constitué en totalité par les filtrats de l'exemple 1 pour l'exemple 2, de l'exemple 2 pour l'exemple 3, de l'exemple 3 pour l'exemple 4.

Le solvant de lavage est de l'acétonitrile frais.

Les quantités pondérales d'acétonitrile frais pour les lavages et les quantités pondérales des filtrats sont indiquées dans le tableau 1.

Dans ce tableau 1, sont indiqués également :
- le poids des cristaux de BSU humide (en g),
- le poids des filtrats (en g),
- le poids des condensats (en g),
- le poids de BSU sec (en g),
- la pureté de la BSU sec en %,
- le poids de BSU pur (en g) et le nombre de moles correspondant
- l'analyse des filtrats (principaux constituants),
- la conversion de l'urée désignée par C_{urée},
- le rendement molaire net désigné par R_{BSU}

**TABLEAU 1**

| | **2** | **3** | **4** |
|---|---|---|---|
| UREE : poids (g) ; mole | 112,5 ; 1,827 | 112,5 ; 1,827 | 108,7 ; 1,766 |
| HMDZ: poids (g) ; mole | 323,1 ; 1,914 | 324 ; 1,919 | 324,7 ; 1,923 |
| Filtrats : poids (g) | 721,4 | 721,15 | 724,7 |
| Acétonitrile frais de lavage (g) | 130 | 101 | 70 |

| FILTRATION : | | | |
|---|---|---|---|
| Poids de cristaux de BSU humide (g) | 417,2 | 419,4 | 449 |
| Poids des filtrats (g) | 772,8 | 731,7 | 683,9 |

| SECHAGE : | | | |
|---|---|---|---|
| BSU sec (g) | 371,3 | 367,1 | 370 |
| Pureté du BSU (%) | 99,1 | 99,4 | 99,9 |
| Poids BSU pur (g) ; mole | 367,95 ; 1,800 | 364,89 ; 1,785 | 369,63 ; 1,808 |
| Poids des condensats (g) | 45,45 | 43,95 | 74,8 |

| ANALYSE DES FILTRATS (% en poids) : | | | |
|---|---|---|---|
| UREE | 0,43 | 0,50 | 0,33 |
| HMOZ | 1,81 | 1,68 | 2,51 |
| HMDO | 4,23 | 5,11 | 5 |
| BSU | 1,04 | 0,57 | 0,34 |
| CH₃CN | 91,77 | 91,4 | 90,47 |
| C_{urée} (%) | 97,1 | 96,8 | 98 |
| R_{BSU} (%) | 96,6 | 95 | 99 |

Les pourcentages de NH₃ dégagé en fonction de la durée de réaction sont représentés sur la figure 1 respectivement par :
- par ― o ― o ― o pour l'exemple 2,
- par ―•―•―• pour l'exemple 3, et
- par ―――――― pour l'exemple 4.

## Revendications

1. Procédé de préparation d'urées bis-silylées de formule (I) R¹R²R³-SiNHC(O)NHSi-R⁴R⁵R⁶ (I) dans laquelle R¹, R², R³, R⁴, R⁵ et R⁶, identiques ou différents, représentent un radical hydrocarboné aliphatique, linéaire ou ramifié, ayant un nombre d'atomes de carbone allant de 1 à 5, un radical phényle, un radical benzyle, un radical phénéthyle, qui consiste à faire réagir dans un solvant, l'urée et un disilazane de formule (II) : R¹R²R³-Si-NH-Si-R⁴R⁵R⁶ (II) dans laquelle R¹, R², R³, R⁴, R⁵ et R⁶ ont les mêmes significations que dans la formule (I), ledit procédé consistant à effectuer les étapes suivantes :
a) mettre en contact, sous agitation, un solvant, un disilazane et l'urée,
b) porter le milieu obtenu en a) à une température égale ou inférieure à la température d'ébullition dudit solvant,
c) maintenir, dès le début du dégagement de l'ammoniac, une température égale ou différente à celle utilisée en b) et, de préférence, inférieure à la température d'ébullition du solvant ;
d) maintenir cette température jusqu'à dégagement quasi total de l'ammoniac, puis stripper éventuellement l'ammoniac résiduel par un gaz inerte,
e) refroidir le milieu réactionnel, et
f) récupérer l'urée bis-silylée (I) précipitée par filtration, éventuellement la laver avec un solvant identique ou différent de celui utilisé en a), puis la sécher sous pression réduite ;
ledit procédé étant **caractérisé en ce que** le solvant utilisé en a) pour la réaction et, éventuellement en f) pour le lavage de l'urée bis-silylée (I) est un nitrile aliphatique RCN dans lequel R représente un radical hydrocarboné aliphatique, linéaire ou ramifié, ayant un nombre d'atomes de carbone allant de 1 à 5.

2. Procédé selon la revendication 1, **caractérisé en ce que** le nitrile aliphatique a un nombre d'atomes de carbone allant de 1 à 3.

3. Procédé selon l'une des revendications 1 ou 2, **caractérisé en ce que** le nitrile aliphatique est l'acétonitrile, le propionitrile, le butyronitrile.

4. Procédé selon l'une des revendications 1 à 3, **caractérisé en ce que** le nitrile aliphatique est l'acétonitrile.

5. Procédé selon l'une quelconque des revendications 1 à 4, **caractérisé en ce que** l'on utilise l'urée et le disilazane (II) selon un rapport molaire disilazane (II) / urée allant de 1 à 1,3.

6. Procédé selon la revendication 5, **caractérisé en ce que** le rapport molaire disilazane (II) / urée va de 1,05 à 1,25.

7. Procédé selon l'une quelconque des revendications 1 à 6, **caractérisé en ce que** le solvant est utilisé selon un rapport pondéral solvant / disilazane (II) allant de 1 à 5.

8. Procédé selon la revendication 7, **caractérisé en ce que** le rapport pondéral solvant / disilazane (II) va de 2 à 3.

9. Procédé selon l'une quelconque des revendications 1 à 8, **caractérisé en ce que** l'urée est utilisée sous forme de billes.

10. Procédé selon l'une quelconque des revendications 1 à 9, **caractérisé en ce que** le solvant de réaction utilisé en a) est constitué en totalité ou en partie par les filtrats provenant de la filtration et éventuellement par les condensats provenant du séchage de l'urée bis-silylée (I) d'une opération précédente.

11. Procédé selon la revendication 10, **caractérisé en ce que** le solvant de réaction utilisé en a) est constitué en totalité par les filtrats.

12. Procédé selon la revendication 10, **caractérisé en ce que** le solvant de réaction est constitué en partie par les filtrats et éventuellement par les condensats et **en ce que** le complément est du solvant frais;

13. Procédé selon la revendication 1, **caractérisé en ce que** le solvant utilisé dans l'étape f) pour le lavage de l'urée bis-silylée (I) est identique au solvant de réaction utilisé à l'étape a).

14. Procédé selon l'une quelconque des revendications 1 à 13, **caractérisé en ce que** le disilazane (II) est l'hexaméthyldisilazane.

## Claims

1. A method for preparing bis-silylated ureas having formula (I)
R¹R²R³-SiNHC(O)NHSi-R⁴R⁵R⁶ (I) wherein R¹, R², R³, R⁴, R⁵ and R⁶, are the same or different and represent a linear or branched aliphatic hydrocarbon radical that has from 1 to 5 carbon atoms, a phenyl radical, a benzyl radical, a phenylethyl radical, by reacting urea in a solvent with a disilazane having formula (II): R¹R²R³-Si-NH-Si-R⁴R⁵R⁶ (II) wherein R¹, R², R³, R⁴, R⁵ and R⁶ have the same meanings as in formula (I), which method including the performance of the following steps:
a) bring a solvent, a disilazane, and the urea into contact and agitate,
b) bring the mixture obtained in a) to a temperature equal to or lower than the boiling point temperature of the solvent used,
c) as soon as the release of ammonia begins, maintain a temperature equal to or different from the one used in b) and, preferably, lower than the boiling point of the solvent;
d) maintain this temperature until almost all the ammonia has been released, then strip any residual ammonia using an inert gas,
e) cool the reaction medium, and
f) recover the bis-silylated urea (I) precipitated by filtration, wash it with a solvent that may be the same of different from the one used in a), then dry it under reduced pressure;
which method being **characterised in that** the solvent used in a) for the reaction and, possibly in f) for washing the bis-silylated urea (I) is an aliphatic nitrile RCN wherein R represents a linear or branched, aliphatic hydrocarbon radical, having from 1 to 5 carbon atoms.

2. The method according to the claim 1, **characterised in that** the aliphatic nitrile has from 1 to 3 carbon atoms.

3. The method according to either of claims 1 or 2, **characterised in that** the aliphatic nitrile is acetonitrile, propionitrile, butyronitrile.

4. The method according to any of claims 1 to 3, **characterised in that** the aliphatic nitrile is acetonitrile.

5. The method according to any of claims 1 to 4, **characterised in that** the urea and the disilazane (II) are used in a molar ratio of disilazane (II) / urea from 1 to 1.3.

6. The method according to claim 5, **characterised in that** the molar ratio of disilazane (II) / urea is from 1.05 to 1.25.

7. The method according to any of claims 1 to 6, **characterised in that** the solvent is used in a gravimetric ratio of solvent / disilazane (II) from 1 to 5.

8. The method according to claim 7, **characterised in that** the gravimetric ratio of solvent / disilazane (II) is from 2 to 3.

9. The method according to any of claims 1 to 8, **characterised in that** the urea is used in the form of pellets.

10. The method according to any of claims 1 to 9, **characterised in that** the reaction solvent used in a) is constituted wholly or in part of filtrates originating from the filtration and possibly of condensates originating from the drying of the bis-silylated urea (I) in a previous operation.

11. The method according to claim 10, **characterised in that** the reaction solvent used in a) is constituted wholly of filtrates.

12. The method according to claim 10, **characterised in that** the reaction solvent is constituted in part of the filtrates and possibly of the condensates, and **in that** the remainder is made up of fresh solvent.

13. The method according to the claim 1, **characterised in that** the solvent used in stage f) for washing the bis-silylated urea (I) is identical to the reaction solvent used in stage a).

14. The method according to any of claims 1 to 13, **characterised in that** the disilazane (II) is hexamethyldisilazane.

## Patentansprüche

1. Verfahren zur Zubereitung von bis-silylierten Harnstoffen der Formel (I) R¹R²R³-SiNHC(O)NHSi-R⁴R⁵R⁶ (I), wobei R¹, R², R³, R⁴, R⁵ und R⁶ identisch oder unterschiedlich sind und ein aliphatisches, lineares oder verzweigtes teerhaltiges Radikal, das eine Kohlenstoffatomanzahl von 1 bis 5 aufweist, ein Phenylradikal, ein Benzylradikal, ein Phenethylradikal darstellen, welches Verfahren darin besteht, in einem Lösungsmittel den Harnstoff und ein Disilazan der Formel (II) : R¹R²R³-Si-NH-Si-R⁴R⁵R⁶ (II) zum Reagieren zu bringen, wobei R¹, R², R³, R⁴, R⁵ und R⁶ dieselben Bedeutungen wie in der Formel (I) haben, welches Verfahren darin besteht, die folgenden Schritte durchzuführen:
a) unter Schütteln ein Lösungsmittel, ein Disilazan und den Harnstoff miteinander in Kontakt zu bringen,
b) das in Schritt a) erhaltene Medium auf eine Temperatur gleich oder kleiner als die Siedetemperatur des Lösungsmittels zu bringen,
c) bei beginnender Freisetzung des Ammoniaks eine Temperatur gleich oder unterschiedlich zu der in Schritt b) eingesetzten und vorzugsweise kleiner als die Siedetemperatur des Lösungsmittels aufrechtzuerhalten,
d) diese Temperatur bis zur gleichsam völligen Freisetzung des Ammoniaks aufrechtzuerhalten und sodann eventuell das restliche Ammoniak durch ein inertes Gas auszutreiben,
e) das Reaktionsmedium abzukühlen, und
f) den durch Filtern ausgefällten bis-silylierten Harnstoff (I) wiederzugewinnen, eventuell mit einem Lösungsmittel zu waschen, welches zu dem in Schritt a) verwendeten ident oder unterschiedlich ist, sodann unter verringertem Druck zu trocknen;
welches Verfahren **dadurch gekennzeichnet ist, daß** das in Schritt a) für die Reaktion und eventuell in Schritt f) für das Waschen des bis-silylierten Harnstoffes (I) verwendete Lösungsmittel ein aliphatisches Nitril RCN ist, wobei R ein aliphatisches teerhaltiges lineares oder verzweigtes Radikal darstellt, das eine Kohlenstoffatomanzahl von 1 bis 5 aufweist.

2. Verfahren nach Anspruch 1, **dadurch gekennzeichnet, daß** das aliphatische Nitril eine Kohlenstoffatomanzahl von 1 bis 3 aufweist.

3. Verfahren nach einem der Ansprüche 1 oder 2, **dadurch gekennzeichnet, daß** das aliphatische Nitril Acetonitril, Propionitril, Butyronitril ist.

4. Verfahren nach einem der Ansprüche 1 bis 3, **dadurch gekennzeichnet, daß** das aliphatische Nitril Acetonitril ist.

5. Verfahren nach einem der Ansprüche 1 bis 4, **dadurch gekennzeichnet, daß** der Harnstoff und das Disilazan (II) in einem Molverhältnis Disilazan (II) / Harnstoff von 1 bis 1,3 verwendet werden.

6. Verfahren nach Anspruch 5, **dadurch gekennzeichnet, daß** das Molverhältnis Disilazan (II) / Harnstoff von 1,05 bis 1,25 beträgt.

7. Verfahren nach einem der Ansprüche 1 bis 6, **dadurch gekennzeichnet, daß** das Lösungsmittel in einem Gewichtsverhältnis Lösungsmittel / Disilazan (II) von 1 bis 5 verwendet wird.

8. Verfahren nach Anspruch 7, **dadurch gekennzeichnet, daß** das Gewichtsverhältnis Lösungsmittel / Disilazan (II) von 2 bis 3 beträgt.

9. Verfahren nach einem der Ansprüche 1 bis 8, **dadurch gekennzeichnet, daß** der Harnstoff in Kugelform verwendet wird.

10. Verfahren nach einem der Ansprüche 1 bis 9, **dadurch gekennzeichnet, daß** das in Schritt a) verwendete Reaktionslösungsmittel zur Gänze oder zum Teil von den Filtraten, die von der Filterung stammen, und eventuell von den Kondensaten, die von der Trocknung des bis-silylierten Harnstoffes (I) in einem vorhergehenden Verfahrensschritt stammen, gebildet wird.

11. Verfahren nach Anspruch 10, **dadurch gekennzeichnet, daß** das in Schritt a) verwendete Reaktionslösungsmittel zur Gänze von den Filtraten gebildet wird.

12. Verfahren nach Anspruch 10, **dadurch gekennzeichnet, daß** das Reaktionslösungsmittel zum Teil von den Filtraten und eventuell von den Kondensaten gebildet wird, und daß die Ergänzung frisches Lösungsmittel ist.

13. Verfahren nach Anspruch 1, **dadurch gekennzeichnet, daß** das in Schritt f) verwendete Lösungsmittel zum Waschen des bis-silylierten Harnstoffes (I) mit dem in Schritt a) verwendeten Reaktionslösungsmittel ident ist.

14. Verfahren nach einem der Ansprüche 1 bis 13, **dadurch gekennzeichnet, daß** das Disilazan (II) Hexamethyldisilazan ist.
